# EUROPEAN PATENT APPLICATION

(11) **EP 4 686 238 A1**
(43) Date of publication of application: **28.01.2026**
(21) Application number: 23927995.3
(22) Date of filing: 21.03.2023
(51) Int. Cl.: H04W 8/00

(54) **SENSING NODE DISCOVERY METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN)
(74) Representative: Novagraaf Technologies
(86) International application number: PCT/CN2023/082879
(87) International publication number: WO 2024/192680

(57) **Abstract**

The present application relates to the technical field of communications, and discloses a sensing node discovery method and apparatus, a device, and a storage medium. The method is performed by a first network element for sensing a service, and comprises: determining an access network device as a sensing node or a sensing assistance node, wherein the access network device is obtained by the first network element by means of querying.

## Description

### TECHNICAL FIELD

Embodiments of the present disclosure relate to the technical field of communications, and in particular, relate to a method and an apparatus for discovering a sensing node, and a device and a storage medium thereof.

### RELATED ART

Generally, cellular networks are typically used in wireless data transmission and communication. However, wireless electromagnetic waves signals used by the cellular networks also have environmental sensing capabilities, such as hand gestures recognition, respiration monitoring, terminal movement speed detection. Therefore, in future cellular networks, acquisition of sensing information may also be considered.

In the process of acquiring sensing information, a core network needs to determine a current access network device or an auxiliary terminal as a sensing node or a sensing-assisting node to implement the sensing services.

### SUMMARY

Embodiments of the present disclosure provide a method and an apparatus for discovering a sensing node, and a device and a storage medium thereof, applicable to a process determines an access network device as a sensing node or a sensing-assisting node. The technical solutions are as follows:

According to an aspect of the embodiments of the present disclosure, a method for discovering a sensing node is provided. The method is performed by a first network element for sensing services, and includes:
determining an access network device as a sensing node or sensing-assisting node;
wherein access network device is acquired by the first network element via a query.

According to an aspect of the embodiments of the present disclosure, a method for discovering a sensing node is provided. The method is performed by an access network device, and includes:
registering second area information with a first network element for sensing services;
wherein the second area information is used for the first network to query an access network device as a sensing node or a sensing-assisting node.

According to an aspect of the embodiments of the present disclosure, a method for discovering a sensing node is provided. The method is performed by an access and mobility management function (AMF), and includes:
feeding back first node information to an access network device;
wherein the first node information is used for the access network device to register second area information with a first network element for sensing services, wherein the second area information is for the first network element to query an access network device as a sensing node or a sensing-assisting node for sensing services, the first node information corresponding to the first network element.

According to an aspect of the embodiments of the present disclosure, a method for discovering a sensing node is provided. The method is performed by a first network element for sensing services, and includes:
receiving radio access network (RAN) node information fed back from an AMF;
wherein the RAN node information is used for the first network element to query an access network device as a sensing node or a sensing-assisting node.

According to an aspect of the embodiments of the present disclosure, a method for discovering a sensing node is provided. The method is performed by an AMF, and includes:
feeding back RAN node information to a first network element for sensing services;
wherein the RAN node information is used for the first network element to query an access network device as a sensing node or a sensing-assisting node.

According to an aspect of the embodiments of the present disclosure, a method for discovering a sensing node is provided. The method is performed by a network repository function (NRF), and includes:
querying associated information of an AMF by a first network element for sensing services;
wherein the associated information of the AMF is used for the first network element to determine an AMF for communication therewith, wherein the AMF communicating with the first network element is used for the first network element to feed back RAN node information, the RAN node information being used for the first network element to query an access network device as a sensing node or a sensing-assisting node.

According to an aspect of the embodiments of the present disclosure, an apparatus for discovering a sensing node is provided. The apparatus includes:
a determining module, configured to determine an access network device as a sensing node or a sensing-assisting node;
wherein the access network device is acquired by the first network element for sensing services via a query.

According to an aspect of the embodiments of the present disclosure, an apparatus for discovering a sensing node is provided. The apparatus includes:
a registration module, configured to register the second area information with the first network element for sensing services;
wherein the second area information is used for the first network element to query an access network device as a sensing node or a sensing-assisting node.

According to an aspect of the embodiments of the present disclosure, an apparatus for discovering a sensing node is provided. The apparatus includes:
a feedback module to feed back first node information to an access network device;
wherein the first node information is used by the access network device to register second area information with first network element for sensing services, the second area information is used by the first network to query an access network device as a sensing node or a sensing-assisting node, the first node information corresponding to the first network element.

According to an aspect of the embodiments of the present disclosure, an apparatus for discovering a sensing node is provided. The apparatus includes:
a receiver module used to receive AMF feedback at the RAN node;
wherein the RAN node information is used by the first node element to query an access network device as a sensing node or a sensing-assisting node for sensing services.

According to an aspect of the embodiments of present disclosure, an apparatus for discovering a sensing node is provided. The apparatus includes:
a feedback module used to feed back RAN node information to the first network element for sensing services;
wherein the RAN node information is used by the first network element to query an access network device as a sensing node or a sensing-assisting node for sensing services.

According to an aspect of the embodiments of the present disclosure, an apparatus for discovering a sensing node is provided. The apparatus includes:
a query module used to query AMF association information by the first network element for sensing services;
wherein AMF association information is used by the first network element to determine the AMF for communication, the AMF communicating with the first network element is used to feed back RAN node information to the first network element, RAN node information is used by the first network element to query an access network device as a sensing node or a sensing-assisting node.

According to an aspect of the embodiments of the present disclosure, a first network element for sensing services is provided. The first network element is configured to perform the method for discovering a sensing node in the above aspect.

According to an aspect of the embodiments of the present disclosure, an access network device is provided. The access network device is configured to perform the method for discovering a sensing node in the above aspect.

According to an aspect of the embodiments of the present disclosure, an AMF is provided. The AMF is configured to perform the method for discovering a sensing node in the above aspect.

According to an aspect of the embodiments of the present disclosure, an NRF is provided. The NRF is configured to perform the method for discovering a sensing node in the above aspect.

According to an aspect of the embodiments of the present disclosure, a computer-readable storage medium storing a computer program is provided. The computer program, when loaded and run by a processing unit, causes the processing unit to perform the method for discovering a sensing node in the above aspect.

According to an aspect of the embodiments of the present disclosure, a chip is provided. The chip includes programmable logical circuitry and/or one or more program instructions, wherein the chip, when running, is caused to perform the method for discovering a sensing node in the above aspect.

According to an aspect of the embodiments of the present disclosure, a computer program product is provided. The computer program product includes one or more computer instructions stored in the computer-readable storage medium. The one or more computer instructions, when read from the computer-readable storage unit and executed by a processing unit, cause the processing unit to perform the method for discovering a sensing node in the above aspect.

The technical solutions according to the embodiments of the present disclosure achieve at least one of the following beneficial effects:

An access network device is acquired by a first network element via a query, and is determined as a sensing node or a sensing-assisting node for sensing services, such that the access network device implements sensing services.

### BRIEF DESCRIPTION OF DRAWINGS

For clearer descriptions of the technical solutions according to the embodiments of the present disclosure, the following briefly introduces the accompanying drawings require for describing the embodiments. Apparently, the accompanying drawings in the following description show merely some embodiments of the present disclosure, and persons of ordinary skill in the art may still derive order drawings from these accompanying drawing without creative efforts.
FIG. 1 is an architecture diagram of a 5th generation (5G) mobile network according to some embodiments of the present disclosure;
FIG. 2 is a flowchart of a sensing process according to some embodiments of the present disclosure;
FIG. 3 is a flowchart of a method for discovering a sensing node according to some embodiments of the present disclosure;
FIG. 4 is a flowchart of a method for discovering a sensing node according to some embodiments of the present disclosure;
FIG. 5 is a flowchart of a method for discovering a sensing node according to some embodiments of the present disclosure;
FIG. 6 is a flowchart of a method for discovering a sensing node according to some embodiments of the present disclosure;
FIG. 7 is a flowchart of a method for discovering a sensing node according to some embodiments of the present disclosure;
FIG. 8 is a flowchart of a method for discovering a sensing node according to some embodiments of the present disclosure;
FIG. 9 is a flowchart of a method for discovering a sensing node according to some embodiments of the present disclosure;
FIG. 10 is a flowchart of a method for discovering a sensing node according to some embodiments of the present disclosure;
FIG. 11 is a schematic diagram of an apparatus for discovering a sensing node according to some embodiments of the present disclosure;
FIG. 12 is a schematic diagram of an apparatus for discovering a sensing node according to some embodiments of the present disclosure;
FIG. 13 is a schematic diagram of an apparatus for discovering a sensing node according to some embodiments of the present disclosure;
FIG. 14 is a schematic diagram of an apparatus for discovering a sensing node according to some embodiments of the present disclosure;
FIG. 15 is a schematic diagram of an apparatus for discovering a sensing node according to some embodiments of the present disclosure;
FIG. 16 is a schematic diagram of an apparatus for discovering a sensing node according to some embodiments of the present disclosure; and
FIG. 17 is a schematic structural diagram of a communication device according to some embodiments of the present disclosure.

### DETAILED DESCRIPTION

For clearer description of the objectives, technical solutions and advantages of the present disclosure, embodiments of the present disclosure are described in detail hereinafter in conjunction with the accompanying drawings.

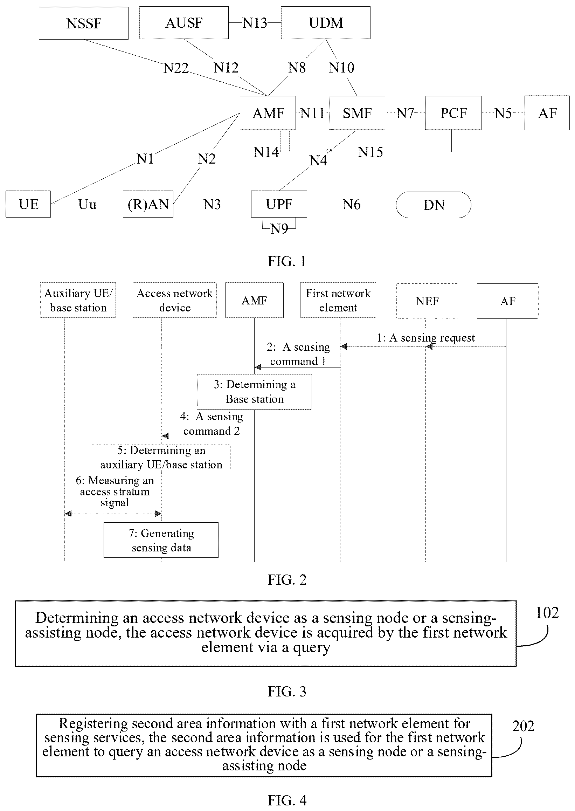

Referring to FIG. 1, a 5^{th} generation mobile network includes: a user equipment (UE), a RAN node, a user plane function (UPF), a data network (DN) and a control plane function (CPF).

The CPF includes: an access and AMF, a session management function (SMF), a policy control function (PCF), a unified data manager (UDM), an application function (AF), a network slice selection function (NSSF), and an authentication server function (AUSF).

The UE establishes an access stratum connection with an access network (AN) over the Uu air interface, and exchanges access stratum messages and performs wireless data transmission thereafter. The UE is connected at a non-access stratum (NAS) over an N1 interface, thereby exchanging NAS messages. The AMF implements a mobility management function in a core network, and the SMF is responsible for session management in the core network. Other than mobility management for the UE, the AMF also serves as relay for session management related messages between the UE and the SMF. The PCF implements a policy management function in the core network, and is responsible for formulating policies related to the mobility management, session management, charging and other policies for the UE. The UPF implements a user plane function in the core network, and is responsible for performing data transmission with an external network over an N6 interface, and performs data transmission with an AN over an N3 interface.

For example, cellular networks are exclusively used for communication such as 5G network. In some embodiments, wireless electromagnetic waves signals used by cellular networks are not only able to transmit data by radio and communication, but also have environmental sensing capabilities. For example, the cellular networks are capable of performing action or hand gesture recognition, respiration monitoring, terminal movement speed detection, environment imaging, weather monitoring, or the like. Therefore, in future cellular networks, communication and data transmission are no longer the only considerations, but acquisition of sensing information may also be considered.

At present, support for sensing capabilities in beyond 5G networks is under discussion. For example, by adding a first network element for sensing services and workflow, the sensing function is supported. The first network element may be configured as a sensing function (SF) or referred to as a sensing function network element, a sensing network element, or the like. The first network element is referred to as a sensing function in the descriptions hereinafter. In some embodiments, the first network element is a newly added standalone network element in the core network. In some other embodiments, the first network element is a conventional network element in the core network, or may be understood as a reused conventional network element, which acts as the first network element for sensing services, for example, an AF, or a location management function (LMF), or a gateway mobile location center (GMLC).

FIG. 2 illustrates a schematic diagram of a sensing workflow according to some embodiments of the present disclosure, applicable to controlling an access network device or UE to perform UE-level sensing operation. The workflow includes the following steps:
S1: A network exposure function (NEF) forwards an sensing request from an AF to a first network element, wherein the sensing request carries a first target area and a sensing type.
S2: The first network element issues a sensing command 1 to an AMF, wherein the sensing command 1 carries a second target area and a sensing type.
S3: The AMF determines a sensing base station (gNB).
S4: The AMF issues a sensing command 2 to the access network device, wherein the sensing command 2 carries a third target area and a sensing type.
S5: The access network device determines an auxiliary UE/base station.
S6: The access network device and the auxiliary UE/base station jointly measure an access stratum signal.
S7: The access network device generates sensing data.

As described previously, when the AF sends the sensing request directed towards the target UE to a 3^{rd} Generation Partnership Project (3GPP) core network, the core network may determine an appropriate access network device or an auxiliary UE via the first network element (for example, the sensing function) or the AMF, then trigger the wireless measuring capability related to sensing to initiate the sensing information measurement and generate sensing results.

Optionally, key wireless sensing scenarios for integrated sensing and communication (ISAC) include:
1) gNB monostatic sensing link (single-gNB sensing): A gNB transmits a sensing signal and receives an echo signal;
2) Inter-gNB sensing link (gNB-to-gNB sensing): gNB B receives a sensing signal from gNB A;
3) Air interface uplink sensing link (UE-to-gNB uplink sensing): A gNB receives a sensing signal from a UE;
4) Air interface downlink sensing link (UE-to-gNB downlink sensing): A UE receives a sensing signal from a gNB;
5) UE monostatic sensing link (single-UE sensing): A UE transmits a sensing signal and receives an echo signal; and
6) Inter-UE sensing link (UE-to-UE sensing): UE B receives a sensing signal from UE A.

It shall be understood that the initial development stage of B5G integrated sensing and communication focuses on maximizing the reuse of conventional air interface signals for sensing, without introducing significant air interface enhancements. Additionally, considering the complexity of implementing full duplex, cooperative sensing between terminals, between terminals and base stations, or between base stations is a prioritized approach.

FIG. 2 illustrates a per-area level sensing workflow. In regards to per-area level sensing, a sensing target is a specific area or a partner.

Regarding the selection of a sensing node: if the sensing target is per-area, it is required to find an appropriate gNB/UE as a sensing node or a sensing-assisting node specific to that target area. As for participation of the gNB in a sensing scenario (for example, gNB monostatic sensing link, inter-gNB sensing link, air interface uplink sensing link, or air interface downlink sensing link), the sensing node selection process needs to find the gNB neighboring the target area as a sensing node. Hypothetically, a first network/AMF is able to directly select the target area or an appropriate nearby gNB as a sensing node or a sensing-assisting node in a case where the locations of all gNBs are known to the first network/AMF. In some embodiments, regarding the target area, as to issues how an AMF or a first network element of a core network selects the appropriate gNB, which information the selection is based upon, and how to acquire the information, there is yet no a specific practical solution.

Some embodiments of the present disclosure provide a method for discovering a sensing node, such that a first network element for sensing services is allowed to query an access network device, and the access network device acquired by the query as a sensing node or a sensing-assisting node, thereby implementing sensing services.

In some embodiments, the access device registers designated area information (also referred to designated sensing area information) with the first network element, thereby facilitating the query by the first network element, and hence selecting an appropriate access network device as a sensing node or a sensing-assisting node.

Illustratively, the designated area information should be area information supported by the access network device, and is used to describe information related to a designated geographic area, including area information of the geographic area and sensing capability information associated with the area information. For example, the access network device supports sensing services of a geographic area, the area information of the geographic area may be coordinates of a reference point, a radius of the reference point, an area length, an area width, area identification of the area, or the like. In some embodiments, the designated area information may also include the sensing capability information associated with the area such as a sensing mode and a sensing data type supported by the access network device. The sensing data type may be, for example, a basic sensing measurement quantity, a basic attribute of sensing targets, a basic state of sensing targets, or a sensing result, or the like.

In some other embodiments, the first network element performs the query for an access network device via an AMF. For example, the first network element sends an area sensing request to the AMF, thereby enabling the AMF to query RAN node information, and the AMF feeds back the RAN node information to the first network element. The first network element then determines the access network device as a sensing node or a sensing-assisting node.

The RAN node information is used to indicate information of one or more RAN nodes, wherein indication information may also be carried in the RAN node information, such that the first network element to query the access network device based on the indication information and to confirm coverage of the sensing area to the RAN node accordingly.

It shall be understood that any network element for sensing services may be considered as the first network element according to the present disclosure. In some application scenarios, it is possible to express the first network element as a sensing control network element, a sensing function network element, a sensing network element, or the like. The following description uses an SF to express the first network element, and other similar expressions are not repeated herein.

The following describes in detail two methods for discovering a sensing node:

### Manner 1: The first network element for sensing services directly queries the access network device.

FIG. 3 illustrates a flowchart of a method for discovering a sensing node according to some exemplary embodiments of the present disclosure. The method is performed by a first network element (e.g., SF) for sensing services, and includes the following step.

In S102, the first network element determines an access network device as a sensing node or a sensing-assisting node.

Illustratively, the access network device is acquired by the first network element via a query.

In some embodiments, the access network device is acquired by the first network element via a query based on at least one of: first area information received by the first network element; or second area information registered by the access network device.

The first area information is used to indicate a request for target/specified area information. Optionally, the first area information is transmitted by any one of: a UE, an AMF, an AF, or a network exposure function (NEF). In some embodiments, the first area information is carried in an area sensing request. For example, a network function (NF) transmits the area sensing request to the SF, and the first area information is carried in the area sensing request. The first area information is used to indicate relevant information of a target area corresponding to the area sensing request.

The second area information is used to indicate information about the coverage area of sensing signals of the access network device. In some embodiments, the second area information is registered by the access network device based on first network element node information fed back from an AMF, wherein the first node information corresponds to the first network element. For example, the access network device receives or transmits sensing signals in a physical area. The access network device may sense the physical area, and the access network device reports the sensing area information corresponding to the physical area to the AMF. The AMF may query the SF node (i.e., the first network element node) serving the access network device based on the sensing area information corresponding to the physical area, and the AMF feeds back the node information of the SF node (i.e., the first network element node information) to the access network device. Subsequently, the access network device may register the second area information with the corresponding SF node based on the node information of the SF node.

A plurality of methods are available for the AMF to query the first network element node information, including but not limited to at least one of: querying an NRF for the first node information; selecting the first node information based on the first network element that has requested to subscribe to notification messages from the AMF; or selecting the first node information based on preconfigured node information.

Illustratively, the SF registers the service area information to an NRF. The service area information is used for the AMF to determine SF node information. The service area information is used to indicate the information corresponding to the service area where the SF provides sensing services. The service area information optionally includes the area information of the service area and/or the sensing capability information corresponding to the area information. In some embodiments, the SF may query an AMF in the vicinity of the service area, and subscribe to notification messages from the AMF. Subsequently, the AMF may select an SF from all SFs that have requested subscription. In other embodiments, information of corresponding SF nodes may also be preconfigured, and the AMF selects an SF from all preconfigured the SF nodes.

The first node information includes at least one of: identification information of the first network element, such as SF identity (SF ID) information; fully qualified domain name (FQDN) information of the first network element; private address information of the first network element, such as an Internet Protocol (IP) address of the SF within the core network; or public address information of the first network element, such as an IP address of the SF within the public network.

In some embodiments, the first area information and/or the second area information may also be named as first sensing area information and/or second sensing area information, which is used to indicate the information of a physical area where sensing services may be implemented. Optionally, at least one of the first area information or the second area information includes at least one of: area information, or sensing capability information corresponding to the area information.

Optionally, the area information includes at least one of: coordinates of a reference point, a radius of the reference point, an area length; an area width, one or more area identifiers, or an area identifier specified by the protocol. The area identifier is used to indicate a certain geographic area, and the method for determining the area identifier may be specified based on the protocol. That is, a zone ID and a zone may be specified according to a standard or protocol. The area identifier specified by the protocol may be a 3GPP internal area identifier, optionally including cell ID information, tracking area ID information, and the like.

For example, the area information includes the coordinates of the reference point and the radius of the reference point. For example, the area information includes the coordinates of the reference point, the area length, and the area width. For example, the area information includes one or more area identifiers, or the area identifier specified by the protocol.

Optionally, the sensing capability information includes at least one of: a sensing mode supported by the access network device, such as self-transmit and self-receive sensing, sensing by receiving sensing signals as a receive node, sensing by transmitting sensing signals to other nodes as a transmit node, or the like; or a sensing data type, such as received signals or raw channel information (e.g., complex-valued results, amplitudes/phases, and in-phase (I) data/quadrature (Q) data of received signals or channel responses, and related operation results thereof). In some embodiments, the sensing data types include at least one of: a basic sensing measurement quantity; a basic attribute of sensing targets; a basic state of sensing targets or a sensing result.

Correspondingly, in some embodiments, the first network element (e.g., SF) has at least one of: the capability of processing the corresponding sensing data type, or the capability of processing sensing data acquired via sensing modes such as self-transmission and self-reception, or the like.

The basic sensing measurement quantity includes at least one of: a delay, a Doppler shift, an angle, an intensity, or a multi-dimensional combination of the above measurement quantities (such as point cloud information, a delay-Doppler matrix, or the like). Illustratively, the basic attributes and/or basic states of the sensing target may be distance, speed, orientation, acceleration, and the like. The sensing result is used to indicate a final result acquired upon sensing, such as whether a sensing target exists, a spatial position of the sensing target, a trajectory of the sensing target, an action of the sensing target, an expression of the sensing target, a vital sign of the sensing target, a quantity of sensing targets, a imaging result of the sensing target, weather, air quality, a shape of the sensing target, a material of the sensing target, composition of the sensing target, or the like.

In summary, in the method for discovering a sensing node according to the embodiments of the present disclosure,, the first network element for sensing services may directly query the access network device, and determine the access network device acquired via the query as a sensing node or a sensing-assisting node, thereby enabling the access network device to implement sensing services.

In some embodiments, the first network element may query the access network device based on the received first area information transmitted by other network elements and the second area information registered by the access network device. For example, a corresponding access network device is selected based on the target sensing area information requested by the NF and the locally stored supported sensing area information registered by the access network device, so as to implement sensing services.

FIG. 4 illustrates a flowchart of a method for discovering a sensing node according to some exemplary embodiments of the present disclosure. The method is performed by an access network device, and includes the following step.

In S202, the access network device registers second area information with a first network element for sensing services.

Illustratively, the second area information is used for the first network element to query an access network device as a sensing node or a sensing-assisting node.

The second area information is used to indicate information about the coverage area of the sensing signals of the access network device. Optionally, the second area information is registered by the access network device based on first network element node information fed back from an AMF, wherein the first node information corresponds to the first network element.

Based on this, the method for discovering a sensing node according to the embodiments of the present disclosure further includes: receiving the first node information fed back by the AMF; wherein the first node information is used for the access network device to register the second area information with the first network element, and the first node information corresponds to the first network element.

Furthermore, the method for discovering a sensing node according to the embodiments of the present disclosure further includes: reporting third area information to the AMF; wherein the third area information is used for the AMF to determine the first node information.

It shall be understood that, the access network device receives or transmits sensing signals in a physical area. The access network device may sense the physical area, and the access network device reports the third area information corresponding to the physical area to the AMF. The AMF may query the first network element serving the access network device based on the third area information, and the AMF feeds back the first network element node information corresponding to the first network element to the access network device. Subsequently, the access network device may register the second area information with the corresponding first network element based on the first network element node information.

Similar to the first area information and the second area information, the third area information may also be named as third sensing area information, which is used to indicate the information of a physical area for implementing sensing services supported by the access network device.

In some embodiments, the second area information is a subset of the third area information. It shall be understood that, the intersection of the service area of the first network element (e.g., SF) and the service area corresponds to the third area information. For example, the service area corresponding to the third area information includes three areas A, B, and C, and the service area of the SF is {B, C}, then the service area corresponding to the second area information is {B, C}. Illustratively, in a case where the second area information is a subset of the third area information, the first node information optionally includes the service area information of the first node.

In some embodiments, the second area information is not a subset of the third area information. As illustrated in the example above, the service area corresponding to the second area information may also be {A, B, C}, the SF only records the information corresponding to {B, C} based on its own service area.

Optionally, the third area information includes at least one of: area information; or sensing capability information corresponding to the area information. The area information includes at least one of: coordinates of a reference point, a radius of the reference point, an area length, an area width, one or more area identifiers, or an area identifier specified by the protocol. Additionally, the sensing capability information includes at least one of: a sensing mode supported by the access network device, or a sensing data type. In some embodiments, the sensing data types include at least one of: a basic sensing measurement quantity, a basic attribute of sensing targets, a basic state of sensing targets, or a sensing result.

In summary, in the method for discovering a sensing node according to the embodiments of the present disclosure, the first network element for sensing services may directly query the access network device, and determine the access network device acquired via the query as a sensing node or a sensing-assisting node, thereby enabling the access network device to implement sensing services. The access network device registers the second area information with the first network element. The second area information is used for the first network element to query a sensing node or a sensing-assisting node.

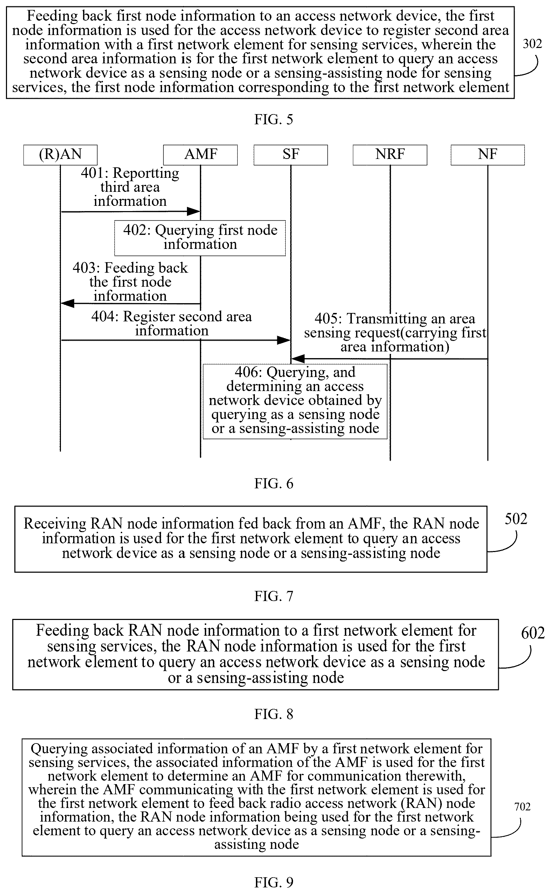

FIG. 5 illustrates a flowchart of a method for discovering a sensing node according to some exemplary embodiments of the present disclosure. The method is performed by an AMF, and includes:

In S30, the AMF feeds back first node information to an access network device.

Illustratively, the first node information is used for the access network device to register second area information with a first network element for sensing services, wherein the second area information is used for the first network element to query an access network device as a sensing node or a sensing-assisting node for sensing services, wherein the first node information corresponds to the first network element.

According to the above description, the second area information is used to indicate information about the coverage area of the sensing signal of the access network device. In some embodiments, the second area information is registered by the access network device based on first network element node information fed back from the AMF.

In some embodiments, the first node information includes at least one of: identification information of the first network element, such as an SF ID; FQDN information of the first network element, such as an SF FQDN; private address information of the first network element, such as an IP address of the SF within the core network; or public address information of the first network element, such as an IP address of the SF in the public network.

In some embodiments, the first node information is acquired by at least one of:

### Querying an NRF

In an example where the first network element is an SF, the SF registers the service area information to an NRF. The service area information is used for the AMF to determine the SF node information. The service area information is used to indicate the information corresponding to the service area where the SF provides sensing services. The service area information optionally includes the area information of the service area and/or the sensing capability information corresponding to the area information.

### Selection based on the first network elements that have requested subscription to notification messages from the AMF

In an example where the first network element is an SF, the SF may query an AMF in the vicinity of the service area, and subscribe to notification messages from the AMF. Subsequently, the AMF may select an SF node from all SF nodes that have requested subscription.

### Selection based on preconfigured node information

In an example where the first network element is an SF, node information of corresponding SFs may be preconfigured, and the AMF selects an SF (i.e., the first node information) from the preconfigured SF nodes.

With reference to the above description, to implement the feedback of the first node information to the access network device, the access network device may report the supported sensing area information to the AMF. Optionally, the method for discovering a sensing node according to the embodiments of the present disclosure further includes: receiving third area information from the access network device; wherein the third area information is used for the AMF to determine the first node information.

Similar to the first area information and the second area information, the third area information may also be named as third sensing area information, which is used to indicate the information of a physical area for implementing sensing services supported by the access network device. Optionally, the third area information includes at least one of: area information; or sensing capability information corresponding to the area information. The area information includes at least one of: coordinates of a reference point, a radius of the reference point, an area length, an area width, one or more area identifiers, or an area identifier specified by the protocol. Additionally, the sensing capability information includes at least one of: a sensing mode supported by the access network device, or a sensing data type. In some embodiments, the sensing data types include at least one of: a basic sensing measurement quantity, a basic attribute of sensing targets, a basic state of sensing targets, or a sensing result.

In summary, in the method for discovering a sensing node according to the embodiments of the present disclosure, the first network element for sensing services may directly query the access network device, and determine the access network device acquired via the query as a sensing node or a sensing-assisting node, thereby enabling the access network device to implement sensing services. The access network device registers the second area information with the first network element. The second area information is used for the first network element to query a sensing node or a sensing-assisting node.

In summary, in the method for discovering a sensing node according to the embodiments of the present disclosure, the first network element for sensing services may directly query the access network device, and determine the access network device acquired via the query as a sensing node or a sensing-assisting node, thereby enabling the access network device to implement sensing services. The AMF feeds back the first node information to the access network device. The first node information is used for the access network device to register second area information with the first network element, thereby enabling the first network element to query a sensing node or a sensing-assisting node based on the second area information.

FIG. 6 illustrates a flowchart of a method for discovering a sensing node according to some exemplary embodiments of the present disclosure. In an example where the first network element is an SF and an area sensing request is transmitted by an NF, the method includes the following steps.

In S401, an access network device reports third area information to an AMF.

Illustratively, the third area information is used by the AMF to determine first node information. Considering that the first network element is the SF, the first node information may be understood as SF node information.

With reference to the above description, the third area information may also be named as third sensing area information, the third area information is used to indicate the information of a physical area for implementing sensing services supported by the access network device. Illustratively, the third area information optionally includes at least one of: area information; or sensing capability information corresponding to the area information.

The area information includes at least one of: coordinates of a reference point, a radius of the reference point, an area length; an area width, one or more area identifiers, or an area identifier specified by the protocol. Additionally, the sensing capability information includes at least one of: a sensing mode supported by the access network device, or a sensing data type. In some embodiments, the sensing data types include at least one of: a basic sensing measurement quantity, a basic attribute of sensing targets, a basic state of sensing targets, or a sensing result.

In some embodiments, the third area information may be transmitted via a Next Generation Application Protocol (NGAP) setup request, or the third area information may be transmitted via a control plane message (N2 message).

In S402, the AMF queries the first node information.

In S403, the AMF feeds back the first node information to the access network device.

Illustratively, the first node information is used for the access network device to with the SF.

With reference to the above description, the first node information may be acquired by at least one of the following methods via the query: the AMF queries an NRF; the AMF selects the first node information based on the first network element that requests subscription to notification messages from the AMF; or the AMF selects the first node information based on preconfigured node information.

For example, the SF registers service area information with the NRF, and the service area information is used by the AMF to determine SF node information. The service area information is used to indicate the information corresponding to the service area where the SF provides sensing services. Optionally, the service area information includes the area information of the service area and the sensing capability information corresponding to the area information. Still for example, the SF may query an AMF in the vicinity of the service area, and subscribe to notification messages from the AMF. Subsequently, the AMF may select one SF from all SFs requesting subscription. Still for example, node information of corresponding SFs may be preconfigured, and the AMF selects an SF node from the corresponding SF nodes that are preconfigured.

In S404, the access network device registers second area information with the SF.

Illustratively, the second area information is used for the SF to query the access network device as a sensing node or a sensing-assisting node.

In response to receiving the first node information fed back by the AMF, the access network device may register the second area information with the corresponding SF accordingly. The second area information is used to indicate the information about the coverage area of the sensing signal of the access network device.

For relevant description of the second area information, reference may be made to the above description, which is not elaborated herein.

In S405, the NF transmits an area sensing request to the SF.

Illustratively, the area sensing request carries first area information. The first area information is used for the SF to query the access network device as a sensing node or a sensing-assisting node. The first area information is used to indicate the information about the target/specified area requested by the area sensing request.

For relevant description of the first area information, reference may be made to the above description, which is not elaborated herein.

In S406, the SF performs a query, and the queried access network device is determined as a sensing node or a sensing-assisting node.

Through S404 and S405, the SF may acquire the first area information and the second information, and thus acquires the coverage area (which may be stored locally) of the sensing signal of the access network device, and the target/specified area requested by the area sensing request. Accordingly, the access network device may be determined as a sensing node or a sensing-assisting node. For example, the access network device corresponding to an overlapping area of the coverage area and the target/specified area is determined as the access network device serving as a sensing node or a sensing-assisting node.

In summary, in the method for discovering a sensing node according to the embodiments of the present disclosure, the first network element for sensing services may directly query the access network device, and determine the access network device acquired via the query as a sensing node or a sensing-assisting node, thereby enabling the access network device to implement sensing services.

Illustratively, the method for discovering a sensing node according to the embodiments of the present disclosure may be implemented as follows:

S1: An access network device reports sensing area information (i.e., the third area information) to an AMF.

a. The sensing area information describes a geographic area. The access network device may receive or transmit sensing signal for this area and the access network device may sense this area. The sensing area information may also include sensing capability information, specifically including the supported sensing schemes, such as self-transmission and self-reception sensing, sensing by receiving sensing signals as a receive node, sensing by transmitting sensing signals to other nodes as a transmit node or the like. The sensing capability information may also include: 1) the type of sensing data that may be reported, such as received signals or raw channel information (e.g., complex-valued results, amplitudes/phases, and in-phase (I) data/quadrature (Q) data of received signals or channel responses, and related operation results thereof); 2) a basic sensing measurement quantity (e.g., a delay, a Doppler shift, an angle, an intensity, and a multi-dimensional combined representation (e.g., point cloud information, a delay-Doppler matrix, and the like)); 3) a basic attribute or state of sensing targets (e.g., a distance, a speed, an orientation, an acceleration, and the like); 4) a sensing result (e.g., whether the target exists, a spatial position, a trajectory, an action, an expression, a vital sign, a quantity, an imaging result, a weather, an air quality, a shape, a material, composition, and the like).

b. The area information includes, but is not limited to:
i. coordinates of a reference point and a radius of the reference point;
ii. coordinates of the reference point, an area length and an area width;
iii. one or more area identifiers, and the area identifier is used to indicate geographic areas (e.g., zone ID, wherein the determination methods of zone and zone ID are described in section 5.10.13.2 of the 3GPP TS 36.331); and
iv. internal area identification of 3GPP, including cell ID information, tracking area ID information, and the like.

c. The reported message may be transmitted via an NGAP setup request, an N2 message, and the like.

S2: In response to receiving the reported message, the AMF queries the SF (i.e., the first node information) that may serve the RAN node. Specifically, the query methods may include the following steps:

d. The SF registers service area information with the NRF (referring to the above-mentioned area information), and the service area information may also include sensing capability information (including the types of sense data supported for processing, and the like) and the like. The AMF selects the corresponding SF node by querying the area information from the NRF.

e. An SF may query an AMF in the vicinity of the service area and subscribe to notification message from the AMF. The AMF selects an SF from all SFs that have requested subscription.

f. The AMF may preconfigure information of the corresponding SFs and select an SF node from the corresponding SF nodes.

S3: The AMF feeds back information of the selected SF to the RAN node. Specifically, the node information of the selected SF includes:

g. SF ID information;

h. FQDN information of the SF;

i. private address information of the SF within the 5G core network (e.g., an IP address, and the like); and

j. public address information of the SF in the public network (e.g., an IP address or the like).

S4: The access network device reports its sense area information (i.e., the above-mentioned second area information) to the corresponding SF according to the SF information.

S5: The NF transmits the area sensing request to the SF, and the area sensing request includes target sensing area information (i.e., the first area information).

The target sensing area information in S5 may differ from the information registered in S4, and may include not only area information but also the requested sensing manner or types of sensing services. The specific form of the target sensing area information may also be different from the form stored by the SF. The SF may convert the form of the area information according to the local implementation and then select the corresponding RAN node. It is also possible that the SF first queries other network elements to acquire the converted area information and then selects the corresponding RAN node.

S6: The SF selects the corresponding access network device for sensing services based on the target sensing area information requested by the NF and the sensing area information supported by the local stored access network device registration.

According to the above embodiments, for sensing at the area level, the default SF may acquire the area information supported by the RAN node. Based on this, the embodiment of the present disclosure proposes an implementation method by which the SF acquires the area information supported by the RAN node (i.e., the RAN node registers with the SF node). The method is used for selecting the RAN node for area sensing services. In the embodiments, when the RAN node registers its capabilities with the AMF, the AMF selects an SF node to serve the RAN node, and the RAN node directly registers with the SF. Subsequently, in response to receiving a sensing request transmitted by other network elements, the SF may directly query to select the corresponding RAN node.

### Manner 2: The first network element for sensing services queries the access network device via the AMF.

With reference to the above description, in manner 1, the first network element may perform a direct query. For example, the first network element determines an access network device as a sensing node or a sensing-assisting node by means of the known first area information and second area information.

In contrast, in manner 2, the first network element may perform an indirect query. For example, in a case where a RAN node registers specified area information with an NRF via the AMF, the first network element queries the NRF to acquire the corresponding AMF, and thus the first network element queries with the AMF to determine the access network device as the sensing node or the sensing-assisting node. The specific process is described hereinafter.

FIG. 7 illustrates a flowchart of a method for discovering a sensing node according to some exemplary embodiments of the present disclosure. The method is performed by a first network element (e.g., SF) for sensing services, and includes the following step.

In S502, the first network element receives RAN node information fed back from an AMF.

Illustratively, the RAN node information is used for the first network element to query an access network device as a sensing node or a sensing-assisting node.

The RAN node information is used to indicate node information of one or more RAN nodes.

It should be understood that the one or more RAN nodes corresponding to the RAN node information fed back by the AMF should be one or more RAN nodes corresponding to the access network device supporting sensing services. That is, the RAN node information is information that satisfies a feedback condition. The feedback condition is used to indicate that the RAN node corresponding to the RAN node information is the RAN node corresponding to the access network device that supports sensing services.

In some embodiments, the RAN node information includes at least one of: first indication information for indicating a sensing area covered by a single RAN node; second indication information for indicating the sensing area covered by an aggregation of a plurality of RAN nodes; identification information of a RAN node; or address information of the RAN node.

In some embodiments, the RAN node information includes the first indication information, and ID information or address information of the RAN node indicated by the first indication information. Upon acquiring the RAN node information, the first network element may determine the RAN node is capable of independently covering the sensing area. Subsequently, the first network element may confirm specific coverage situation with the RAN node. When coverage is satisfied, the first network element may determine the RAN node as the access network device as the sensing node or the sensing-assisting node.

In other embodiments, the RAN node information includes the second indication information, and ID information or address information of a plurality of RAN nodes indicated by the second indication information. Upon acquiring the RAN node information, the first network element may determine that an aggregation of the plurality of RAN nodes is capable of covering a sensing area. Subsequently, similar to the above example, the first network element may confirm specific coverage with the plurality of RAN nodes and determine the access network device as the sensing node or the sensing-assisting node.

In some embodiments, the RAN node information is acquired by the AMF via a query.

In some embodiments, the first network element transmits a first area sensing request to the AMF, wherein the first area sensing request is used to request the AMF to query the RAN node information. Accordingly, the AMF queries the RAN node information corresponding to the one or more RAN nodes in response to the first area sensing request transmitted by the first network element. The coverage area of the one or more RAN nodes needs to include a target sensing area, for example, independent coverage by one single RAN node, or collective coverage by the aggregation of the plurality of RAN nodes.

In some embodiments, the first area sensing request carries target area information (which may also be named as target sensing area information), which includes area information of the requested target area, and/or sensing capability information corresponding to the area information. For relevant descriptions of the area information and the sensing capability information, reference may be made to the above description, which is not elaborated herein.

To cause the first network element to transmit the first area sensing request to a corresponding AMF, the method for discovering a sensing node according to the embodiments of the present disclosure further includes: querying associated information of the AMF from an NRF. The associated information of the AMF includes at least one of: identification information of the AMF; or address information of the AMF.

Illustratively, the SF may query the corresponding AMF from the NRF based on target area information, and acquire the associated information of the corresponding AMF from an NRF, such as ID information of the AMF and/or address information of the AMF. Subsequently, the SF transmits the first area sensing request to the queried AMF. The first area sensing request carries the target area information.

In some embodiments, the method for discovering a sensing node further includes: receiving fourth area information, wherein the fourth area information is used to request to query the associated information of the AMF.

In some embodiments, the fourth area information is carried in a second area sensing request.

In some embodiments, the NRF queries the associated information of the AMF based on fifth area information registered with the AMF. The fifth area information is used to indicate the area information supported by the AMF. The fifth area information is determined based on sixth area information reported by the RAN node.

Similar to the first area information in manner 1, the fourth area information is used to indicate information about the target/specified area of a request. Optionally, the fourth area information is transmitted by any one of: a UE, an AMF, an AF or an NEF. In some embodiments, the fourth area information is carried in the second area sensing request. For example, an NF transmits a second area sensing request to an SF, and carries fourth area information in the second area sensing request. The fourth area information is used to indicate relevant information about a target area corresponding to the second area sensing request.

Similar to the second area information in manner 1, the fifth area information is used to indicate information about a service area of sensing services supported by the AMF, and the sixth area information is used to indicate information about a coverage area of sensing signals of the access network device. The fifth area information may be acquired by aggregating the sixth area information by the AMF according to one or more sixth area information supported by the managed RAN nodes, and the method of aggregation may be merged area management, or other methods, which is not limited by the present disclosure.

Similar to the first/second/third area information, the fourth/fifth/sixth area information may also be named as fourth/fifth/sixth sensing area information, which are respectively used to indicate information about a service area that supports sensing services. Optionally, at least one of the fourth area information, the fifth area information, or the sixth area information includes at least one of: area information; or sensing capability information corresponding to the area information.

The area information includes at least one of: coordinates of a reference point; a radius of the reference point; an area length; an area width; one or more area identifiers; or an area identifier specified by the protocol. Additionally, the sensing capability information includes at least one of: a sensing mode supported by an access network device; or a sensing data type. In some embodiments, the sensing data type includes at least one of: a sensing basic measurement quantity; a basic attribute of a sensing target; a basic attribute of the sensing target; or a sensing result.

Correspondingly, in some embodiments, the first network element (e.g., SF) has at least one of: the ability to process a corresponding sensing data type; the ability to process sensing data acquired by a sensing method, such as self-generated self-collection or the like.

It should be understood that the sixth area information is used to indicate information about the coverage area of the sensing signal of the access network device, the fifth area information is used to indicate information about the service area supported by the AMF, and the fourth area information is used to indicate information about the target/specified area of the request.

In summary, in the method for discovering a sensing node according to the embodiments of the present disclosure, the first network element for sensing services may indirectly query the access network device via the AMF, and determine the access network device acquired via the query as the sensing node or the sensing-assisting node, thereby enabling the access network device to implement sensing services. The first network element implements the query by receiving RAN node information fed by the AMF.

FIG. 8 illustrates a flowchart of a method for discovering a sensing node according to some exemplary embodiments of the present disclosure. The method is performed by an AMF, and includes the following step.

S602: The AMF feeds back RAN node information to a first network element for sensing services.

Illustratively, the RAN node information is used for the first network element to query an access network device as a sensing node or a sensing-assisting node.

The RAN node information is used to indicate node information of one or more RAN nodes.

It should be understood that the one or more RAN nodes corresponding to the RAN node information fed back by the AMF should be one or more RAN nodes corresponding to the access network device supporting sensing services. That is, the RAN node information is information that meets a feedback condition, and the feedback condition is used to indicate that the RAN corresponding to the RAN node information is the RAN node corresponding to the access network device that supports sensing services.

Optically, the RAN node information includes at least one of: first indication information for indicating a sensing area covered by a single RAN node; second indication information for indicating the sensing area covered by an aggregation of a plurality of RAN nodes; identification information of a RAN node; or address information of the RAN node.

In some embodiments, the RAN node information includes the first indication information, and ID information or address information of the RAN indicated by the first indication information. After acquiring the RAN node information, the first network element may determine the RAN is capable of independently covering the sensing area. Subsequently, the first network element may confirm specific coverage situation with the RAN node. When coverage is satisfied, the first network element may determine the RAN node as the access network device as the sensing node or the sensing-assisting node.

In other embodiments, the RAN node information includes the second indication information, and ID information or address information of a plurality of RAN node indicated by the second indication information. Upon acquiring the RAN node information, the first network element may determine that an aggregation of the plurality of RAN nodes is capable of covering a sensing area. Subsequently, similar to the above example, the first network element may confirm specific coverage with the plurality of RAN nodes and determine the access network device as the sensing node or the sensing-assisting node.

In some embodiments, the RAN node information is acquired by the AMF via the query; and the method for discovering a sensing node according to the embodiments of the present disclosure may further includes: querying the RAN node information.

In some embodiments, the first network element transmits a first area sensing request to the AMF, and the first area sensing request is used to request the AMF to query the RAN node information; and the AMF queries the RAN node information corresponding to the one or more RAN nodes according to the first area sensing request transmitted by the first network element. The coverage area of the one or more RAN nodes is necessary to include a target sensing area, such as being covered by the single RAN node, or covered by the aggregation of the plurality of RAN nodes.

Further, the method for discovering a sensing node according to the embodiments of the present disclosure may further includes: receiving the first area sensing request from the first network element. The first area sensing request is used to request the AMF to query the RAN node information.

In some embodiments, the first area sensing request carries target area information (which may also be named as target sensing area information), which includes area information of the requested target area, and/or sensing capability information corresponding to the area information. The relevant descriptions of the area information and the sensing capability information may be referred to in the above description, which is not elaborated herein.

For transmission of a first area sensing request to a corresponding AMF, the first network element may also query the associated information of the AMF through the NRF to determine the recipient of the first area sensing request.

In some embodiments, the NRF queries the associated information of the AMF based on fifth area information registered with the AMF. The fifth area information is used to indicate the area information supported by the AMF. The fifth area information is determined based on sixth area information reported by the RAN node.

Further, the method for discovering a sensing node according to the embodiments of the present disclosure may further includes: registering the fifth area information with the NRF. The fifth area information is used to indicate area information supported by the AMF, and the fifth area information is used for the NRF and the first network element to query associated information of the AMF.

Further, the method for discovering a sensing node according to the embodiments of the present disclosure may further includes: receiving sixth area information from a RAN node. The sixth area information is used to determine the fifth area information.

In some embodiments, at least one of the fourth area information or the fifth area information includes at least one of: area information; or sensing capability information corresponding to the area information. The relevant descriptions of the area information and the sensing capability information may be referred to in the above description, which is not elaborated herein.

In summary, the embodiment of the present disclosure provides the method for discovering a sensing node. In the method for discovering a sensing node, the first network element for sensing services may query indirectly the access network device via the AMF, and determine the access network device acquired by the query as the sensing node or the sensing-assisting node, thereby enabling the access network device to implement sensing services. The AMF feeds RAN node information to the first network element for the first network element to realize indirect queries.

FIG. 9 illustrates a flowchart of a method for discovering a sensing node according to some exemplary embodiments of the present disclosure. The method is performed by an NRF, and includes the following step.

In S702, the NRF queries RAN node information with a first network element used for sensing services.

Illustratively, the RAN node information is used for the first network element to query an access network device as a sensing node or a sensing-assisting node.

The RAN node information is used to indicate node information of one or more RAN node. Optically, the RAN node information includes at least one of: first indication information for indicating a sensing area covered by a single RAN node; second indication information for indicating the sensing area covered by an aggregation of a plurality of RAN nodes; identification information of a RAN node; or address information of the RAN node.

It should be understood that the NRF performs a query of RAN node information with the first network element, such that the first network element may query the access network device of the sensing node or the sensing-assisting node.

In some embodiments, the embodiment of the present disclosure provides the method for discovering a sensing node. The method for discovering a sensing node further includes: receiving fifth area information registered by the AMF. The fifth area information is used to indicate the area information supported by the AMF. The fifth area information is used to trigger a query of the associated information of the AMF.

For relevant description of the fifth area information, reference may be made to the above description, which is not elaborated herein.

In summary, in the method for discovering a sensing node according to the embodiments of the present disclosure, the first network element for sensing services may indirectly query the access network device via the AMF, and determine the access network device acquired by the query as the sensing node or the sensing-assisting node, thereby enabling the access network device to implement sensing services. The NRF queries the RAN node information with the first network element, such that the first network element may determine the AMF for interaction, thereby requesting the RAN node information from the AMF for the first network element to implement an indirect query.

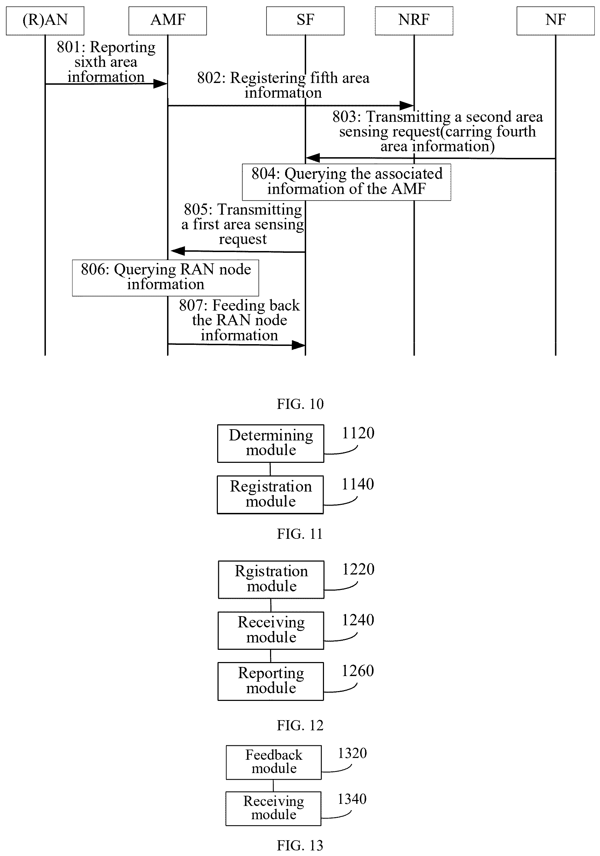

FIG. 10 illustrates a flowchart of a method for discovering a sensing node according to some exemplary embodiments of the present disclosure. In an example where the first network element is an SF and an area sensing request is transmitted by an NF, the method includes some of the following steps.

In S801, an access network device reports sixth area information to an AMF.

Illustratively, the sixth area information is used by the AMF to determine fifth area information.

With reference to the above description, the sixth area information may also be named as sixth sensing area information, which is used to indicate the information of a physical area for implementing sensing services supported by terminal. Illustratively, the sixth area information optionally includes at least one of: area information; or sensing capability information corresponding to the area information.

The area information includes at least one of: coordinates of a reference point; a radius of the reference point; an area length; an area width; one or more area identifiers; or an area identifier specified by the protocol. Additionally, the sensing capability information includes at least one of: a sensing mode supported by an access network device; or a sensing data type. In some embodiments, the sensing data type includes at least one of: a sensing basic measurement quantity; a basic attribute of a sensing target; a basic attribute of the sensing target; or a sensing result.

In some embodiments, the sixth area information may be transmitted via an NGAP setup request or an N2 message.

In S802, the AMF registers fifth area information with the NRF.

The fifth area information is used to indicate the area information supported by the AMF.

In some embodiments, the fifth area information may be acquired by aggregating the sixth area information by the AMF based on one or more pieces sixth area information supported by the managed RAN nodes, and the method of aggregation may be merged area management, or other methods, which is not limited in the present disclosure.

In S803, the NF transmits a second area sensing request to the SF.

Illustratively, the second area sensing request carries the fourth area information, and the fourth information is used to request the query of the associated information of the AMF. In some embodiments, the fourth area information is used to indicate the information about the target/ specified area of a request. Optionally, the fourth area information is transmitted by any of: a UE, an AMF, an AF, an NEF.

In S804, the SF queries the associated information of the AMF.

Optionally, the associated information of the AMF includes at least one of: ID information of the AMF; or address information of the AMF. That is, the SF queries the corresponding the AMF from the NRF according to the second area sensing request, and acquires the associated information of the corresponding AMF from the NRF node.

In S805, the SF transmits a first area sensing request to the AMF.

Illustratively, the first area sensing request is used to request the AMF to query RAN node information.

In some embodiments, the first area sensing request carries target area information (which may also be named as target sensing area information), which includes area information of the requested target area, and/or sensing capability information corresponding to the area information. For relevant description of the area information and the sensing capability information, reference may be made to in the above description, which is not elaborated herein.

Accordingly, the AMF queries the RAN node information corresponding to one or more RAN nodes according to the first area sensing request transmitted by the first network element.

In S806, the AMF queries the RAN node information.

Illustratively, the RAN node information is used by the first network element to query the access network device as the sensing node or the sensing-assisting node. The RAN node information is used to indicate node information of one or more RAN nodes.

Optically, the RAN node information includes at least one of: first indication information for indicating a sensing area covered by a single RAN; second indication information for indicating the sensing area covered by an aggregation of a plurality of RAN nodes; identification information of a RAN node; or address information of the RAN node.

For relevant description of the RAN node information, reference may be made to the above description, which is not elaborated herein.

In S807, the AMF feeds back the RAN node information to the SF.

Illustratively, the one or more RAN nodes corresponding to the RAN node information fed back by the AMF should be one or more RAN nodes corresponding to the access network device supporting sensing services. That is, the RAN node information is information that meets a feedback condition, and the feedback condition is used to indicate that the RAN node corresponding to the RAN node information is the RAN node corresponding to the access network device that supports sensing services.

In response to acquiring the RAN node information, the SF may query according to the RAN node information and determine the queried the access network device as the sensing node or the sensing-assisting node.

In summary, in the method for discovering a sensing node according to the embodiments of the present disclosure, the first network element for sensing services may indirectly query the access network device via the AMF, and determine the access network device acquired by the query as the sensing node or the sensing-assisting node, thereby enabling the access network device to implement sensing services.

Illustratively, the method for discovering a sensing node according to the embodiments of the present disclosure may also include the following steps.

In S1, an access network device reports the sensing area information (i.e., the above-mentioned third area information) to an AMF. The sensing area information may also include sensing capability information supported within the area.

In S2, the AMF registers the sensing area information which supports with the NRF (i.e., the above-mentioned fifth area information). The sensing area information may also include the sensing capability information supported within the area, and the like. The sensing area information supported by the AMF shall be acquired by the AMF according to the aggregation of the sensing area information supported by the managed RAN nodes. The method of aggregation may be merged area management, or other methods, which is not limited by the present disclosure.

In S3, the NF transmits to the SF a second region sensing request that includes target sensing area information (i.e., the above-mentioned fourth region information). The target sensing area information may include not only area information but also a requested sensing mode or a type of sensing services.

In S4, the SF queries the corresponding AMF from the NRF according to the target sensing area information. The information corresponding to the AMF acquired from the NRF may be information such as an AMF ID, an AMF address, or the like.

In S5, the SF transmits the first area sensing request to the AMF.

In S6, the AMF selects one or more corresponding RAN nodes based on the first area sensing request transmitted by the SF. The method for selecting the RAN nodes may be that one or several RAN nodes may all complete coverage of the target sensing area, or the aggregation of the coverage areas of a plurality of RAN nodes may include the target sensing area.

In S7, the AMF feeds back the RAN node information that meets the condition to the SF. The RAN node information may carry an indication message for indicating that the current single RAN node may cover the sensing area, or the aggregation of a plurality of RAN nodes may cover the sensing area. The RAN node information may be specific identification information of the RAN node, or address information of the RAN node, and the like. It could also be that after the AMF feeds back the RAN node information to the SF, the SF confirms the specific coverage to the RAN node.

According to the above embodiments, for sensing at the area level, it is defaulted that SF may acquire the area information supported by the RAN node. Based on this, the embodiments of the present disclosure propose an implementation method by which the SF acquires the area information supported by RAN node (i.e., the SF query is implemented via the AMF). The method is used for selecting RAN node for area sensing services. In the embodiments, in response to receiving the second sensing request, the SF acquires the corresponding the RAN node by querying the AMF. In the embodiments, the design and deployment of the SF are more flexible, and may support a plurality of SFs with different functions in selecting RAN nodes in the same area for different sensing services.

The following are device embodiments of the present disclosure. For details not described in detail herein, reference may be made to the corresponding descriptions in the method embodiments, which are not elaborated herein.

FIG. 11 illustrates a block diagram of an apparatus for discovering a sensing node according to some exemplary embodiments of the present disclosure.

The apparatus includes: a determining module 1120, configured to determine an access network device as a sensing node or a sensing-assisting node; wherein the access network device is acquired by a first network element for sensing services via a query.

In some embodiments, the access network device is acquired by the first network element via the query according to at least one of: first area information received by the first network element; or second area information registered by the access network device.

In some embodiments, the first area information is carried in an area sensing request.

In some embodiments, the second area information is registered by the access network device based on first network element node information fed back from an AMF. The first node information corresponds to the first network element.

In some embodiments, the apparatus further includes a registration module 1140. The registration module 1140 is configured to register the service area information with an NRF; wherein the service area information is used for the AMF to determine the first node information.

In some embodiments, the first node information includes at least one of: identification information of the first network element; FQDN information of the first network element; private address information of the first network element; or public address information of the first network element.

In some embodiments, at least one of the first area information or the second area information includes at least one of: area information; or sensing capability information corresponding to the area information.

FIG. 12 illustrates a block diagram of an apparatus for discovering a sensing node according to some exemplary embodiments of the present disclosure.

The apparatus includes: a registration module 1220, configured to register second area information with a first network element for sensing services; wherein the second area information is for the first network element to query an access network device as a sensing node or a sensing-assisting node.

In some embodiments, the apparatus further includes a receiving module 1240. The receiving module 1240 is configured to receive first node information fed back from an AMF; wherein the first node information is used for an access network device to register the second area information with the first network element. The first node information corresponds to the first network element.

In some embodiments, the apparatus further includes a reporting module 1260. The reporting module 1260 is configured to report third area information to the AMF; wherein the third area information is used for the AMF to determine the first node information.

In some embodiments, at least one of the second area information or the third area information includes at least one of: area information; or sensing capability information corresponding to the area information.

FIG. 13 illustrates a block diagram of an apparatus for discovering a sensing node according to some exemplary embodiments of the present disclosure.

The apparatus includes: a feedback module 1320, configured to feed back first node information to an access network device; wherein the first node information is used for the access network device to register second area information with a first network element for sensing services, wherein the second area information is for the first network element to query an access network device as a sensing node or a sensing-assisting node for sensing services. The first node information corresponds to the first network element.

In some embodiments, the first node information is acquired by at least one of: querying an NRF; selection based on the first network element that has requested subscription to notification messages from the AMF; or selection based on preconfigured node information to acquire the first node information.

In some embodiments, the first node information includes at least one of: identification information of the first network element; FQDN information of the first network element; private address information of the first network element; or public address information of the first network element.

In some embodiments, the apparatus further includes a receiving module 1340. The receiving module 1340 is configured to receive third area information from an access network device; wherein the third area information is used for the AMF to determine the first node information.

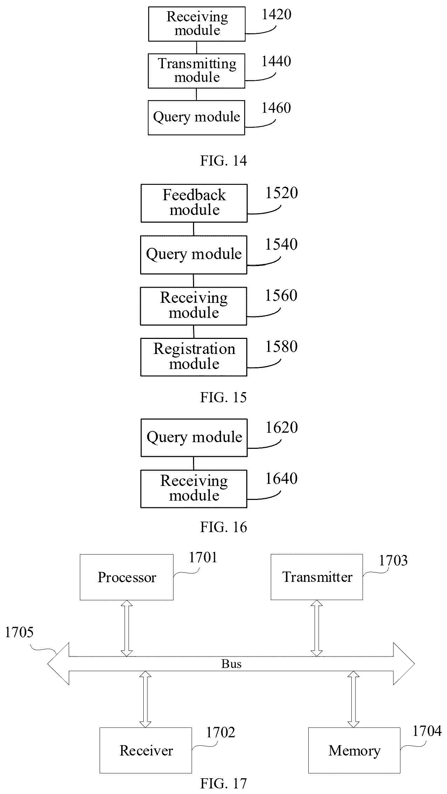

FIG. 14 illustrates a block diagram of an apparatus for discovering a sensing node according to some exemplary embodiments of the present disclosure.

The apparatus includes: a receiving module 1420, configured to receive RAN node information fed back from an AMF; wherein the RAN node information is used for the first network element to query the access network device as a sensing node or a sensing-assisting node.

In some embodiments, the RAN node information includes at least one of: first indication information for indicating a sensing area covered by a single RAN node; second indication information for indicating the sensing area covered by an aggregation of a plurality of RAN nodes; identification information of a RAN node; or address information of the RAN node.

In some embodiments, the RAN node information is acquired by the AMF via the query.

In some embodiments, the apparatus further includes a transmitting module 1140. The transmitting module 1140 is configured to transmit a first area sensing request to the AMF; wherein the first area sensing request is used to request the AMF to query the RAN node information.

In some embodiments, the apparatus further includes a query module 1460, configured to query an NRF about associated information of the AMF.

In some embodiments, the associated information of the AMF includes at least one of: identification information of the AMF; or address information of the AMF.

In some embodiments, the receiving module 1420 is further configured to receive fourth area information, wherein the fourth area information is used to request to query the associated information of the AMF.

In some embodiments, the fourth area information is carried in a second area sensing request.

In some embodiments, the NRF queries associated information of the AMF based on fifth area information registered by the AMF, wherein the fifth area information is used to indicate area information supported by the AMF.

In some embodiments, the fifth area information is determined according to sixth area information reported by a RAN node.

In some embodiments, at least one of the fourth area information, the fifth area information or the sixth area information includes at least one of: area information; or sensing capability information corresponding to the area information.

In some embodiments, the RAN node information is used to indicate node information of one or more RAN nodes.

FIG. 15 illustrates a block diagram of an apparatus for discovering a sensing node according to some exemplary embodiments of the present disclosure.

The apparatus includes: a feedback module, configured to feed back RAN node information to a first network element for sensing services; wherein the RAN node information is used for a first network element to query the access network device as a sensing node or a sensing-assisting node for sensing services.

In some embodiments, the RAN node information includes at least one of: first indication information for indicating a sensing area covered by a single RAN node; second indication information for indicating the sensing area covered by an aggregation of a plurality of RAN nodes; identification information of a RAN node; or address information of the RAN node.

In some embodiments, the apparatus further includes a query module 1540. The query module 1540 is configured to query the RAN node information.

In some embodiments, the apparatus further includes a receiving module 1560. The receiving module 1560 is configured to receive a first area sensing request from the first network element; wherein the first area sensing request is to request an AMF to query the RAN node information.

In some embodiments, the apparatus further includes a registration module 1580. The registration module 1580 is configured to register the fifth area information with an NRF, wherein the fifth area information is used to indicate information supported by the AMF; wherein the fifth area information is used for the NRF and the first network element to query associated information of the AMF.

In some embodiments, the receiving module 1560 is further configure to receive sixth area information from an RAN node; wherein the sixth area information is used to determine the fifth area information.

In some embodiments, at least one of the fifth area information or the sixth area information includes at least one of the: area information; or sensing capability information corresponding to the area information.

In some embodiments, the RAN node information is used to indicate information of one or more RAN nodes.

FIG. 16 illustrates a block diagram of an apparatus for discovering a sensing node according to some exemplary embodiments of the present disclosure.

The apparatus includes: a query module 1620, configured to query associated information of an AMF by a first network element for sensing services; wherein the associated information of the AMF is used for the first network element to determine an AMF for communication therewith, wherein the AMF communicating with the first network element is used for the first network element to feed back RAN node information. The RAN node information is used for the first network element to query an access network device as a sensing node or a sensing-assisting node.

In some embodiments, the apparatus further includes a receiving module 1640. The receiving module 1640 is configured to receive fifth area information registered by the AMF; wherein the fifth area information is used to indicate the area information supported by the AMF. The fifth area information is used to trigger query of the associated information of the AMF.

FIG. 17 is a schematic structural diagram of a communication device (a terminal device or a network device) according to some exemplary embodiments of the present disclosure. The communication device 1700 includes: a processor 1701, a receiver 1702, a transmitter 1703, a memory 1704, and a bus 1705.

The processor 1701 includes one or more processing cores, and achieves various functional applications and information processing by running software programs and modules.

The receiver 1702 and the transmitter 1703 are practiced as a communication assembly. The communication assembly is a communication chip.

The memory 1704 is connected to the processor 1701 via the bus 1705.

The memory 1704 is configured to store one or more instructions, and the processor 1701, when loading and executing the one or more instructions, is caused to perform various processes in the above method embodiments.

In addition, the memory 1704 is practiced by any type of volatile or non-volatile storage device or combinations thereof. The volatile or non-volatile storage device includes but is not limited to a disk or optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

Some embodiments of the present disclosure further provide a first network element for sensing services. The first network element is configured to perform the method for discovering the sensing node in the above method embodiments.

Some embodiments of the present disclosure further provide an access network device. The access network device is configured to perform the method for discovering the sensing node in the above method embodiments.

Some embodiments of the present disclosure further provide an AMF. The AMF is configured to perform the method for discovering the sensing node in the above method embodiments.

Some embodiments of the present disclosure further provide an NRF. The NRF is configured to perform the method for discovering the sensing node in the above method embodiments.

Some embodiments of the present disclosure further provide a computer-readable storage medium storing one or more programs, wherein the one or more programs, when loaded and run by a processor, cause the processor to perform the method for discovering the sensing node in the above method embodiments.

Some embodiments of the present disclosure further provide a chip. The chip includes programmable logical circuitry or one or more programs, wherein the chip, when running, is caused to perform the method for discovering the sensing node in the above method embodiments.

Some embodiments of the present disclosure further provide a computer program product or a computer program. The computer program product or the computer program includes one or more computer instructions. wherein the one or more computer instructions are stored in a computer-readable storage medium, and a processor of a computer device, when reading, loading, and executing the one or more computer instructions from the computer-readable storage medium, causes the computer device to perform the method for discovering a sensing node as defined in the above method embodiments.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

## Claims

1. A method for discovering a sensing node, performed by a first network element for sensing services, the method comprising:
determining an access network device as a sensing node or a sensing-assisting node;
wherein the access network device is acquired by the first network element via a query.

2. The method according to claim 1, wherein the access network device is acquired by the first network element via the query based on at least one of:
first area information received by the first network element; or
second area information registered by the access network device.

3. The method according to claim 2, wherein the first area information is carried in an area sensing request.

4. The method according to claim 2, wherein the second area information is registered by the access network device based on first network element node information fed back from an access and mobility management function (AMF), the first node information corresponding to the first network element.

5. The method according to claim 4, further comprising:
registering service area information to a network repository function (NRF);
wherein the service area information is used for the AMF to determine the first node information.

6. The method according to claim 4, wherein the first node information comprises at least one of:
identification information of the first network element;
fully qualified domain name (FQDN) information of the first network element;
private address information of the first network element; or
public address information of the first network element.

7. The method according to any one of claims 2 to 6, wherein at least one of the first area information or the second area information comprises at least one of:
area information; or
sensing capability information corresponding to the area information.

8. A method for discovering a sensing node, performed by an access network device, the method comprising:
registering second area information with a first network element for sensing services;
wherein the second area information is used for the first network element to query an access network device as a sensing node or a sensing-assisting node.

9. The method according to claim 8, further comprising:
receiving first node information fed back by an access and mobility management function (AMF);
wherein the first node information is used for the access network device to register the second area information with the first network element, the first node information corresponding to the first network element.

10. The method according to claim 9, further comprising:
reporting third area information to the AMF;
wherein the third area information is used for the AMF to determine the first node information.

11. The method according to any one of claims 8 to 10, wherein at least one of the second area information or the third area information comprise at least one of:
area information;
sensing capability information corresponding to the area information.

12. A method for discovering a sensing node, performed by an access and mobility management function (AMF), the method comprising:
feeding back first node information to an access network device;
wherein the first node information is used for the access network device to register second area information with the first network element for sensing services, wherein the second area information is for the first network element to query an access network device as a sensing node or a sensing-assisting node for sensing services, the first node information corresponding to the first network element.

13. The method according to claim 12, wherein the first node information is acquired by at least one of:
querying a network repository function (NRF);
selection based on the first network element that has requested subscription to notification messages from the AMF; or
selection based on preconfigured node information.

14. The method according to claim 13, wherein the first node information comprises at least one of:
identification information of the first network element;
fully qualified domain name (FQDN) information of the first network element;
private address information of the first network element; or
public address information of the first network element.

15. The method according to any one of claims 12 to 14, further comprising:
receiving third area information from an access network device;
wherein the third area information is used for the AMF to determine the first node information.

16. A method for discovering a sensing node, performed by a first network element for sensing services, the method comprising:
receiving radio access network (RAN) node information fed back from an access and mobility management function (AMF);
wherein the RAN node information is used for the first network element to query an access network device as a sensing node or a sensing-assisting node.

17. The method according to claim 16, wherein the RAN node information comprises at least one of:
first indication information for indicating a sensing area covered by a single RAN node;
second indication information for indicating the sensing area covered by an aggregation of a plurality of RAN nodes;
identification information of a RAN node; or
address information of the RAN node.

18. The method according to claim 16 or 17, wherein the RAN node information is acquired by the AMF via a query.

19. The method according to 18, further comprising:
transmitting a first area sensing request to the AMF;
wherein the first area sensing request is used to request the AMF to query the RAN node information.

20. The method according to claim 16 or 17, further comprising:
querying associated information of the AMF from a network repository function (NRF).

21. The method according to claim 20, wherein the associated information of the AMF comprises at least one of:
identification information of the AMF; or
address information of the AMF.

22. The method according to claim 20, further comprising:
receiving fourth area information;
wherein the fourth area information is used to request to query the associated information of the AMF.

23. The method according to 22, wherein the fourth area information is carried in a second area sensing request.

24. The method according to claim 20, wherein the NRF queries associated information of the AMF based on fifth area information registered by the AMF, wherein the fifth area information is used to indicate area information supported by the AMF.

25. The method according to claim 24, wherein the fifth area information is determined based on sixth area information reported by a RAN node.

26. The method according to any one of claims 22 to 25, wherein at least one of the fourth area information, the fifth area information or the sixth area information comprises at least one of:
area information; or
sensing capability information corresponding to the area information.

27. The method according to any one of claims 16 to 26, wherein the RAN node information is used to indicate node information of one or more RAN nodes.

28. A method for discovering a sensing node, performed by an access and mobility management function (AMF), the method comprising:
feeding back radio access network (RAN) node information to a first network element for sensing services;
wherein the RAN node information is used for the first network element to query an access network device as a sensing node or a sensing-assisting node.

29. The method according to claim 28, wherein the RAN node information comprises at least one of:
first indication information for indicating a sensing area covered by a single RAN node;
second indication information for indicating the sensing area covered by an aggregation of a plurality of RAN nodes;
identification information of a RAN node; or
address information of the RAN node.

30. The method according to claim 28 or 29, further comprising:
querying the RAN node information.

31. The method according to 30, further comprising:
receiving a first area sensing request from the first network element;
wherein the first area sensing request is used to request the AMF to query the RAN node information.

32. The method according to any one of claims 28 to 31, further comprising:
registering the fifth area information with a network repository function (NRF), wherein the fifth area information is used to indicate information supported by the AMF;
wherein the fifth area information is used for the NRF and the first network element to query associated information of the AMF.

33. The method according to claim 32, further comprising:
receiving sixth area information from a RAN node;
wherein the sixth area information is used to determine the fifth area information.

34. The method according to claim 32 or 33, wherein at least one of the fifth area information or the sixth area information comprises at least one of:
area information; or
sensing capability information corresponding to the area information.

35. The method according to any one of claims 32 to 34, wherein the RAN node information is used to indicate information of one or more RAN nodes.

36. A method for discovering a sensing node, performed by a network repository function (NRF), the method comprising:
querying associated information of an access mobility and management function (AMF) by a first network element for sensing services;
wherein the associated information of the AMF is used for the first network element to determine an AMF for communication therewith, wherein the AMF communicating with the first network element is used for the first network element to feed back radio access network (RAN) node information, the RAN node information being used for the first network element to query an access network device as a sensing node or a sensing-assisting node.

37. The method according to claim 36, further comprising:
receiving fifth area information registered by the AMF;
wherein the fifth area information is used to indicate the area information supported by the AMF, the fifth area information is used to trigger query of the associated information of the AMF.

38. An apparatus for discovering a sensing node, comprising:
a determining module, configured to determine an access network device as a sensing node or a sensing-assisting node;
wherein the access network device is acquired by the first network element for sensing services via a query.

39. An apparatus for discovering a sensing node, comprising:
a registration module, configured to register the second area information with the first network element for sensing services; wherein the second area information is used for the first network element to query an access network device as a sensing node or a sensing-assisting node.

40. An apparatus for discovering a sensing node, comprising:
a feedback module, configured to feed back first node information to an access network device;
wherein the first node information is for the access network device to register second area information to a first network element for sensing services; wherein the second area is for the first network element to query an access network device as a sensing node or a sensing-assisting node; the first node information corresponding to the first network element.

41. An apparatus for discovering a sensing node, comprising:
a receiving module, configured to receive radio access network (RAN) node information fed back from an access and mobility management function (AMF);
wherein the RAN node information is used for the first network element to query an access network device as a sensing node or a sensing-assisting node for sensing services.

42. An apparatus for discovering a sensing node, comprising:
a feedback module, configured to feed back radio access network (RAN) node information to a first network element for sensing services;
wherein the RAN node information is used for the first network element to query an access network device as a sensing node or a sensing-assisting node for sensing services.

43. An apparatus for discovering a sensing node, comprising:
a query module, configured to query radio access network(RAN) node information with a first network element for sensing services;
wherein the RAN node information is used for the first network element to query an access network device as a sensing node or a sensing-assisting node.

44. A first network element for sensing services, wherein the first network element is caused to perform any one of claims 1 to 7, or any one of claims 17 to 27 for discovering a sensing node.

45. An access network device, wherein the access network device is configured to perform the method for discovering a sensing node as defined in any one of claims 8 to 11.

46. An access and mobility management function (AMF), wherein the AMF is configured to perform the method for discovering a sensing node as defined in any one of claims 12 to 15, or the method for discovering a sensing node as defined in any one of claims 28 to 35.

47. A network repository function (NRF), wherein the NRF is configured to perform the method for discovering a sensing node as defined in claim 36 or 37.

48. A computer-readable storage medium, wherein the storage medium stores one or more computer programs runnable by a processor to perform the method for discovering a sensing node as defined in any one of claims 1 to 37.

49. A chip, comprising: programmable logical circuitry or one or more programs, wherein the chip, when running, is configured to cause a terminal equipped with the chip to perform the method for determining a sensing node as defined in any one of claims 1 to 37.

50. A computer program product, comprising: one or more computer instructions, wherein the one or more computer instructions are stored in a computer-readable storage medium, and a processor of a computer device, when reading, loading, and executing the one or more computer instructions from the computer-readable storage medium, causes the computer device to perform the method for determining a sensing node as defined in any one of claims 1 to 37.
